# EUROPEAN PATENT APPLICATION

(11) **EP 4 468 777 A1**
(43) Date of publication of application: **27.11.2024**
(21) Application number: 22921041.4
(22) Date of filing: 18.01.2022
(51) Int. Cl.: H04W 24/10

(54) **WLAN SENSING MEASUREMENT METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/072593
(87) International publication number: WO 2023/137592

(57) **Abstract**

The embodiments of the present disclosure relate to the technical field of mobile communications. Provided are a WLAN sensing measurement method and apparatus, and an electronic device and a storage medium. The WLAN sensing measurement method comprises: transmitting a feedback message frame, wherein a first operating parameter of the feedback message frame is the same as a second operating parameter of a null data packet announcement (NDPA) frame and/or is the same as a third operating parameter of a downlink null data packet (DL NDP) frame. The embodiments of the present disclosure provide a way to feed back a measurement result in a non-TB sensing measurement procedure.

## Description

### TECHNICAL FIELD

Embodiments of the invention relate to a field of mobile communication technology, in particular to a wireless local area network (WLAN) sensing measurement method, a WLAN sensing measurement apparatus, an electronic device and a storage medium.

### BACKGROUND

With the rapid development of mobile communication technologies, the wireless fidelity (Wi-Fi) technology has made great progress in terms of transmission rate and throughput. Currently, the Wi-Fi technology studies 320MHz bandwidth transmission, aggregation and collaboration of multiple frequency bands, and the like, and its main application scenarios include video transmission, augmented reality (AR), and virtual reality (VR), etc.

In the currently studied Wi-Fi technology, the wireless local area network (WLAN) sensing technology is supported, and its main application scenarios include: location discovery, proximity detection, and presence detection in dense environments (e.g., home and corporate environments), etc. Non-trigger based (Non-TB) sounding is one of the main sensing modes in WLAN sensing. Since a measurement result can be fed back in a Non-TB sensing measurement procedure, it is necessary to provide a method for feeding back the measurement result.

### SUMMARY

Embodiments of the invention provide a wireless local area network (WLAN) sensing measurement method, a WLAN sensing measurement apparatus, an electronic device and a storage medium, to provide a method for feeding back a measurement result in a Non-trigger based (Non-TB) sensing measurement procedure.

According to a first aspect of embodiments of the invention, a WLAN sensing measurement method, applied to an access point (AP), is provided. The method includes:
sending a feedback message frame, in which a first operating parameter of the feedback message frame is identical to a second operating parameter of a null data packet announcement (NDPA) frame and/or a third operating parameter of a downlink null data packet (DL NDP) frame.

According to a second aspect of embodiments of the invention, a sensing measurement method, applied to a station (STA), is provided. The method includes:
receiving a feedback message frame, in which a first operating parameter of the feedback message frame is identical to a second operating parameter of a null data packet announcement (NDPA) frame and/or a third operating parameter of a downlink null data packet (DL NDP) frame.

According to a third aspect of embodiments of the invention, an access point (AP) is provided. The AP includes:
a sending module, configured to send a feedback message frame, in which a first operating parameter of the feedback message frame is identical to a second operating parameter of a null data packet announcement (NDPA) frame and/or a third operating parameter of a downlink null data packet (DL NDP) frame.

According to a fourth aspect of embodiments of the invention, a station (STA) is provided. The STA includes:
a receiving module, configured to receive a feedback message frame, in which a first operating parameter of the feedback message frame is identical to a second operating parameter of a null data packet announcement (NDPA) frame and/or a third operating parameter of a downlink null data packet (DL NDP) frame.

According to a fifth aspect of embodiments of the invention, a wireless local area network (WLAN) sensing measurement apparatus is provided. The apparatus is applied to an AP, and includes:
a message frame sending module, configured to send a feedback message frame, in which a first operating parameter of the feedback message frame is identical to a second operating parameter of a null data packet announcement (NDPA) frame and/or a third operating parameter of a downlink null data packet (DL NDP) frame.

According to a sixth aspect of embodiments of the invention, a wireless local area network (WLAN) sensing measurement apparatus is provided. The apparatus is applied to an STA and includes:
a message frame receiving module, configured to receive a feedback message frame, in which a first operating parameter of the feedback message frame is identical to a second operating parameter of a null data packet announcement (NDPA) frame and/or a third operating parameter of a downlink null data packet (DL NDP) frame.

According to a seventh aspect of embodiments of the invention, an electronic device is provided. The electronic device includes a memory, a processor and computer programs stored on the memory and executable by the processor. When the computer programs are executed by the processor, one or more methods in the embodiments of the invention are implemented.

According to an eighth aspect of embodiments of the invention, a computer-readable storage medium having computer programs stored thereon is provided. When the computer programs are executed by a processor, one or more methods in embodiments of the invention are implemented.

In the embodiments of the invention, the AP sends a feedback message frame. A first operating parameter of the feedback message frame is identical to a second operating parameter of a NDPA frame and/or a third operating parameter of a DL NDP frame. Embodiments of the invention provide a method for feeding back a measurement result in a Non-TB sensing measurement procedure.

Additional aspects and advantages of embodiments of invention will be given in part in the following descriptions, become apparent in part from the following descriptions, or be learned from the practice of the embodiments of the invention.

### BRIEF DESCRIPTION OF THE DRAWINGS

In order to clearly illustrate technical solutions of embodiments of the invention, a brief description of drawings used in embodiments of the invention is given below. Obviously, the drawings in the following descriptions are only part of embodiments of the invention, and for those skilled in the art, other drawings can be obtained according to these drawings without inventive work.
FIG. 1 is a flowchart of a wireless local area network (WLAN) sensing measurement method of an embodiment of the invention.
FIG. 2 is a first schematic diagram of a first example of an embodiment of the invention.
FIG. 3 is a second schematic diagram of the first example of an embodiment of the invention.
FIG. 4 is a third schematic diagram of the first example of an embodiment of the invention.
FIG. 5 is a first schematic diagram of a second example of an embodiment of the invention.
FIG. 6 is a second schematic diagram of the second example of an embodiment of the invention.
FIG. 7 is a third schematic diagram of the second example of an embodiment of the invention.
FIG. 8 is a flowchart of another WLAN sensing measurement method of an embodiment of the invention.
FIG. 9 is a block diagram of an access point of an embodiment of the invention.
FIG. 10 is a block diagram of a station of an embodiment of the invention.
FIG. 11 is a block diagram of an electronic device of an embodiment of the invention.

### DETAILED DESCRIPTION

In embodiments of the invention, the term "and/or" describes a relation of associated objects, which indicates three relations, for example, "A and/or B" indicates that A exists alone, A and B both exist, and B exists alone. The character "/" generally indicates that the associated objects prior to and after the character "j" is an "or" relation.

The term "multiple" in the embodiments of the invention refers to two or more, which is the similar for other quantifiers.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the embodiments of the invention are only for the purpose of describing specific embodiments, and are not intended to limit the invention. The singular forms of "a" and "the" used in the invention and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the invention to describe various information, the information should not be limited to these terms. These terms are only used to distinguish the same type of information from each other. For example, without departing from the scope of the invention, the first information may also be referred to as the second information, and similarly, the second information may also be referred to as the first information. Depending on the context, the term "if' as used herein can be interpreted as "when", "while" or "in response to determining".

The technical solutions in the embodiments of the invention will be described clearly and completely below in combination with the accompanying drawings in the embodiments of the invention. Clearly, the described embodiments are only a part of the embodiments of the invention, and not all of the embodiments. Based on the embodiments of the invention, other embodiments obtained by those skilled in the art without inventive works all fall within the scope of protection of the invention.

Embodiments of the invention provide a wireless local area network (WLAN) sensing measurement method, a WLAN sensing measurement apparatus, an electronic device and a storage medium, to provide a method for feeding back a measurement result in a Non-trigger based (Non-TB) sensing measurement procedure.

The method and apparatus are based on the same application conception, and since the method and apparatus solve problems based on similar principles, the implementations of the apparatus and the method can be referred to each other, and the repeated contents will be omitted.

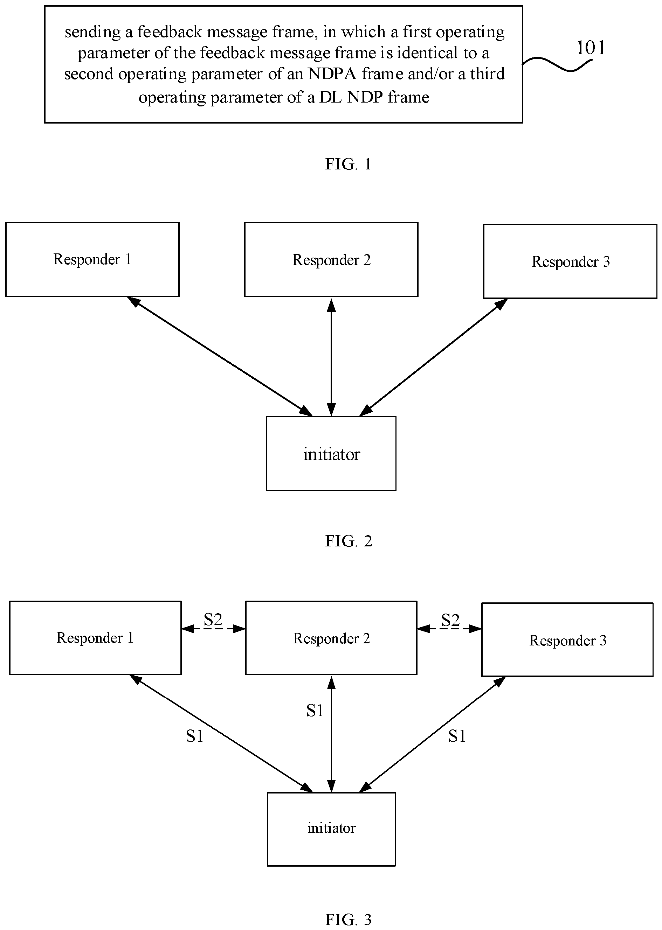

FIG. 1 is a flowchart of a WLAN sensing measurement method of an embodiment of the invention. Optionally, the method may be applied to an access point (AP), and the method includes the following steps.

At step 101, a feedback message frame is sent, in which a first operating parameter of the feedback message frame is identical to a second operating parameter of a null data packet announcement (NDPA) frame and/or a third operating parameter of a downlink null data packet (DL NDP) frame.

As a first example, referring to FIG. 2 to FIG. 4, the WLAN sensing architecture and the WLAN sensing procedure of the WLAN sensing measurement method of embodiments of the invention are introduced first.

FIG. 2 shows a schematic diagram of the architecture involved in the WLAN sensing (procedure). The sensing initiator (or initiator) initiates WLAN sensing (e.g., a WLAN sensing session), and multiple sensing responders (or sensing receivers) or responders may respond to the WLAN sensing, e.g., responder 1, responder 2, and responder 3 in FIG. 2. When the sensing initiator initiates WLAN sensing, multiple associated or unassociated WLAN sensing responders may respond to the WLAN sensing.

As illustrated in FIG. 3, the sensing initiator communicates with the sensing responder via a communication connection (e.g., as shown by the communication connection S1), and one sensing responder communicates with another sensing responder via a communication connection S2.

Each sensing initiator may be a client, and each sensing responder (in this example, i.e., responder 1, responder 2, and responder 3) may be a station (STA) or an AP. The STA and the AP may take on more than one role in the WLAN sensing procedure. For example, in the WLAN sensing procedure, the STA may act as a sensing initiator, and the sensing initiator may be a sensing transmitter, a sensing receiver, or both, or neither. In the WLAN sensing procedure, the sensing responder may also be a sensing transmitter, a sensing receiver, or both.

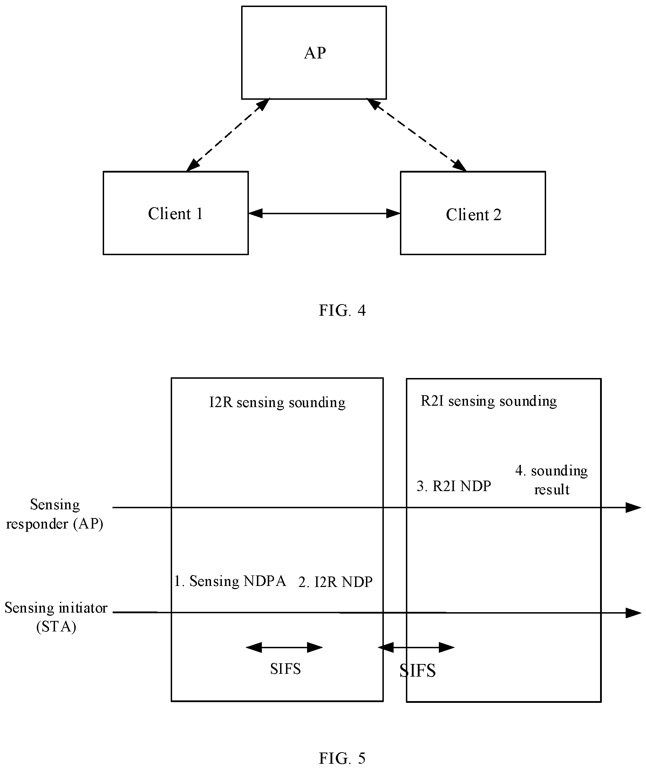

As another architecture, as shown in FIG. 4, the sensing initiator and the sensing responder may both be clients, and they can communicate with each other by connecting to the same AP. In FIG. 4, Client 1 is a sensing initiator, and Client 2 is a sensing responder.

Generally, the WLAN sensing procedure includes procedures of WLAN sensing session setup, WLAN sensing measurement setup, WLAN sensing measurement termination, etc. The WLAN sensing procedure mainly includes Triggered Based Sounding (TB) sensing and Non-TB based sensing. In detail, in the TB-based sensing, an AP acts as an initiator or a transmitter. In the Non-TB based sensing, an STA acts as an initiator or a transmitter.

In the Non-TB based sensing scenario, the AP sends a feedback message frame (i.e., a sensing measurement report) to the STA after completing sensing measurement, and feeds back a measurement result in the feedback message frame. A first operating parameter (or a configuration parameter) of the feedback message frame may be identical to a second operating parameter of an NDPA frame and/or a third operating parameter of a DL NDP frame. Optionally, the first operating parameter, the second operating parameter and/or the third operating parameter include at least one of the following: number of spatial streams (NSS) information, bandwidth (BW) information and TX power information. For example, NSS=1 and BW is 20MHz bandwidth.

The first operating parameter of the feedback message frame may be identical to the second operating parameter of the NDPA frame. In the Non-TB based sensing scenario, the STA sends to the AP the NDPA frame used to indicate sending a null data packet (NDP) frame. The AP receives the NDPA frame, and then sets the operating parameter of the feedback message frame to the second operating parameter of the NDPA frame when sending the feedback message frame subsequently. Optionally, since the first operating parameter is identical to the second operating parameter, there is no need to send indication information for indicating the first operating parameter in the feedback message frame, thereby reducing message overhead.

The first operating parameter of the feedback message frame may be identical to the third operating parameter of the DL NDP frame sent by the AP to the STA. Similarly, since the first operating parameter is identical to the third operating parameter, there is no need to send indication information for indicating the first operating parameter in the feedback message frame, thereby reducing message overhead.

As a second example, referring to FIGS. 5 to 7, several Non-TB based sensing scenarios are illustrated, respectively. SIFS stands for Short Inter-frame Space. In detail, referring to FIG. 5, in an initiator to receiver (I2R) sensing sounding (UL sounding) procedure, the sensing initiator (STA) first performs the first step to send a sensing NDPA frame, and then performs the second step to send an I2R NDP frame. The I2R NDP is involved in the sensing measurement. In a receiver to initiator (R2I) sensing sounding (DL sounding) procedure, the sensing responder first performs the third step to send an R2I NDP frame (R2I NDP is not involved in the sensing measurement), and then performs the fourth step to send a feedback message frame to feed back a sounding result. The first operating parameter of the feedback message frame may be identical to the second operating parameter of the NDPA frame.

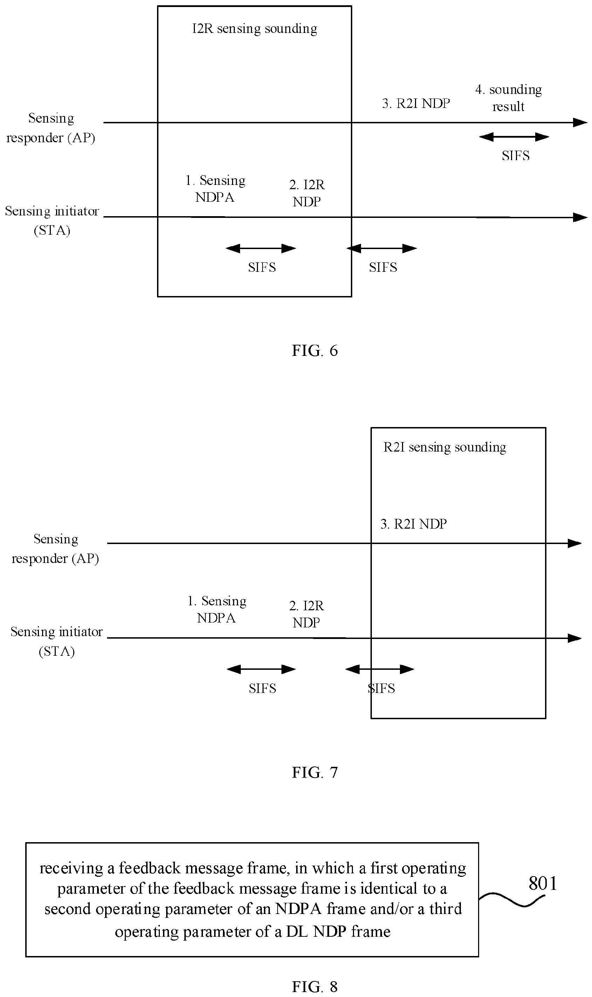

As shown in FIG. 6, in an I2R sensing sounding (UL sounding) procedure, the sensing initiator (STA) performs the first step to send a sensing NDPA frame, and then performs the second step to send an I2R NDP frame. The sensing responder (AP) performs the third step to send an R2I NDP frame, and then performs the fourth step to send a feedback message frame. The first operating parameter of the feedback message frame may be identical to the second operating parameter of the NDPA frame and/or the third operating parameter of the I2R NDP frame. In this procedure, both I2R NDP and R2I NDP are involved in the sensing measurement.

In FIG. 7, in the R2I sensing sounding (DL sounding) procedure, the sensing initiator (STA) first performs the first step to send a sensing NDPA frame, and then performs the second step to send an I2R NDP frame, and I2R NDP is not involved in the sensing measurement. The sensing responder (AP) may perform the third step to execute the DL sounding and send an R2I NDP frame (R2I NDP is involved in the sensing measurement), and then the AP may send a feedback message frame (not shown in FIG. 7). The first operating parameter of the feedback message frame may be identical to the second operating parameter of the NDPA frame.

In embodiments of the invention, the AP sends the feedback message frame. The first operating parameter of the feedback message frame is identical to the second operating parameter of a NDPA frame and/or the third operating parameter of a DL NDP frame. Embodiments of the invention provide a method for feeding back a measurement result in a Non-TB sensing measurement procedure.

Optionally, in the embodiments of the invention, before sending the feedback message frame, the method further includes:
receiving the NDPA frame, and determining the second operating parameter of the NDPA frame.

Referring to the first step in FIGS. 5 to 7, the STA sends a sensing NDPA frame to the AP, correspondingly the AP receives the NDPA frame and determines the second operating parameter of the NDPA frame. The NDPA frame is a unicast message frame. The NDPA frame may include an Association ID (AID) of the AP, for example, if the AID is 2043, it indicates that UL sounding is initiated. If the AID is 2047, it indicates that DL sounding is initiated. The NDPA frame may include an optional range of the first operating parameter, such as NSS, BW and other information.

Optionally, in the embodiments of the invention, before sending the feedback message frame, the method further includes:
receiving an uplink null data packet (UL NDP) frame; and
in response to the UL NDP frame, sending the DL NDP frame.

Referring to the second step in FIGS. 5 to 7, the STA sends an I2R NDP frame (UL NDP frame). Optionally, the operating parameter of the UL NDP frame (e.g., NSS information, BW information, and TX power information) may be the same or different from the operating parameter of the DL NDP frame carried in the NDPA frame. The AP receives the UL NDP frame and performs the third step to send an R2I NDP frame (DL NDP frame) to the STA. Optionally, a number of long training fields (LTFs) in the DL NDP frame is a preset value, for example, 1.

Optionally, the feedback message frame includes WLAN sensing measurement identification information and/or time information. The sensing measurement identification information may be an instance ID. The time information may be a transmission time of the UL NDP frame, i.e., the time when the STA sends the UL NDP frame. Further, the feedback time of the feedback message frame may be delayed feedback or immediate feedback.

Optionally, in the embodiments of the invention, the first operating parameter, the second operating parameter and/or the third operating parameter are determined during a WLAN sensing session setup procedure or a WLAN sensing measurement setup procedure. For example, in the WLAN sensing measurement setup procedure, the sensing measurement setup ID is determined by the initiator before the sensing measurement. The transmission slot can also be specified in the procedure. For unassociated STAs (i.e., STAs that are not in a communication connection with the AP), a timer synchronization function (TSF) of the AP needs to be obtained in advance.

In embodiments of the invention, the AP sends the feedback message frame. The first operating parameter of the feedback message frame is identical to the second operating parameter of the NDPA frame and/or the third operating parameter of the DL NDP frame. Embodiments of the invention provide a method for feeding back a measurement result in a Non-TB sensing measurement procedure.

FIG. 8 is a flowchart of a WLAN sensing measurement method of an embodiment of the invention. Optionally, the method may be applied to a STA, and the method includes the following steps.

At step 801, a feedback message frame is received, in which a first operating parameter of the feedback message frame is identical to a second operating parameter of an NDPA frame and/or a third operating parameter of a DL NDP frame.

The adopted WLAN sensing architecture and the WLAN sensing procedure of the WLAN sensing measurement method provided by the embodiment of the invention are referred to the description of the preceding first example and will not be repeated herein.

Generally, the WLAN sensing procedure includes procedures of WLAN sensing session setup, WLAN sensing measurement setup, and WLAN sensing measurement termination, etc. The WLAN sensing procedure mainly includes TB-based sensing and Non-TB based sensing. In detail, in the TB-based sensing, an AP acts as an initiator or a transmitter. In the Non-TB based sensing, an STA acts as an initiator or a transmitter.

In a Non-TB based sensing scenario, the STA receives a feedback message frame (i.e., a sensing measurement report) sent by the AP after completing sensing measurement, and a measurement result is fed back in the feedback message frame. A first operating parameter (or a configuration parameter) of the feedback message frame may be identical to a second operating parameter of an NDPA frame and/or a third operating parameter of a DL NDP frame. Optionally, the first operating parameter, the second operating parameter and/or the third operating parameter include at least one of the following: NSS information, BW information and TX power information. For example, NSS=1 and BW is 20MHz bandwidth.

The first operating parameter of the feedback message frame may be identical to the second operating parameter of the NDPA frame. In a Non-TB based sensing scenario, the STA sends to the AP an NDPA frame used to indicate sending an NDP frame. The AP receives the NDPA frame, and then sets the operating parameter of the feedback message frame to the second operating parameter of the NDPA frame when sending the feedback message frame subsequently. Optionally, since the first operating parameter is identical to the second operating parameter, there is no need to send indication information for indicating the first operating parameter in the feedback message frame, thereby reducing message overhead.

The first operating parameter of the feedback message frame may be identical to the third operating parameter of the DL NDP frame sent by the AP to the STA. Similarly, since the first operating parameter is identical to the third operating parameter, there is no need to send indication information for indicating the first operating parameter in the feedback message frame, thereby reducing message overhead.

As a second example, referring to FIGS. 5 to 7, several Non-TB based sensing scenarios are illustrated, respectively. In detail, referring to FIG. 5, in an I2R sensing sounding (UL sounding) procedure, the sensing initiator (STA) first performs the first step to send a sensing NDPA frame, and then performs the second step to send an I2R NDP frame. The I2R NDP is involved in the sensing measurement. In an R2I sensing sounding (DL sounding) procedure, the sensing responder first performs the third step to send an R2I NDP frame (R2I NDP is not involved in the sensing measurement), and then the AP performs the fourth step to send a feedback message frame to feed back a sounding result. The STA receives the feedback message frame. The first operating parameter of the feedback message frame may be identical to the second operating parameter of the NDPA frame.

As shown in FIG. 6, in an I2R sensing sounding (UL sounding) procedure, the sensing initiator (STA) performs the first step to send a sensing NDPA frame, and then performs the second step to send an I2R NDP frame. The sensing responder (AP) performs the third step to send an R2I NDP frame, and then the AP performs the fourth step to send a feedback message frame. The STA receives the feedback message frame. The first operating parameter of the feedback message frame may be identical to the second operating parameter of the NDPA frame and/or the third operating parameter of the I2R NDP frame. In this procedure, both I2R NDP and R2I NDP are involved in the sensing measurement.

In FIG. 7, in the R2I sensing sounding (DL sounding) procedure, the sensing initiator (STA) first performs the first step to send a sensing NDPA frame, and then performs the second step to send an I2R NDP frame, and I2R NDP is not involved in the sensing measurement. The sensing responder (AP) may performs the third step to execute the DL sounding and send an R2I NDP frame (R2I NDP is involved in the sensing measurement), and then the AP may send a feedback message frame (not shown in FIG. 7). The STA receives the feedback message frame. The first operating parameter of the feedback message frame may be identical to the second operating parameter of the NDPA frame.

In embodiments of the invention, the STA receives the feedback message frame. The first operating parameter of the feedback message frame may be identical to the second operating parameter of the NDPA frame and/or the third operating parameter of the DL NDP frame. Embodiments of the invention provide a method for feeding back a measurement result in a Non-TB sensing measurement procedure.

Optionally, in the embodiments of the invention, before receiving the feedback message frame, the method further includes:
sending the NDPA frame, in which the NDPA frame includes sensing sounding type information and/or an optional operating parameter for sending the NDP frame.

Referring to the first step in FIGS. 5 to 7, the STA sends a sensing NDPA frame to the AP, the AP receives the NDPA frame and determines the second operating parameter of the NDPA frame. The NDPA frame is a unicast message frame. The NDPA frame may include an AID of the AP, for example, if the AID is 2043, it indicates that UL sounding is initiated. If the AID is 2047, it indicates that DL sounding is initiated. The NDPA frame may include an optional range of the first operating parameter, such as NSS, BW and other information.

Optionally, in the embodiments of the invention, before receiving the feedback message frame, the method further includes:
sending an UL NDP frame, and receiving the DL NDP frame.

Referring to the second step in FIGS. 5 to 7, the STA sends an I2R NDP frame (UL NDP frame). Optionally, the operating parameter of the UL NDP frame (e.g., NSS information, BW information, and TX power information) may be the same or different from the operating parameter of the DL NDP frame carried in the NDPA frame. The AP receives the UL NDP frame and performs the third step to send an R2I NDP frame (DL NDP frame). The STA receives the DL NDP frame. Optionally, a number of LTFs in the DL NDP frame is a preset value, for example, 1.

Optionally, the feedback message frame includes WLAN sensing measurement identification information and/or time information. The sensing measurement identification information may be an instance ID.

The time information may be a transmission time of the UL NDP frame, i.e., the time when the STA sends the UL NDP frame. The feedback time of the feedback message frame may be delayed feedback or immediate feedback.

Optionally, in the embodiments of the invention, the first operating parameter, the second operating parameter and/or the third operating parameter are determined during a WLAN sensing session setup procedure or a WLAN sensing measurement setup procedure.

For example, in the WLAN sensing measurement setup procedure, the sensing measurement setup ID is determined by the initiator before the sensing measurement. The transmission slot can also be specified in the procedure. For unassociated STAs (i.e., STAs that are not in a communication connection with the AP), a TSF of the AP needs to be obtained in advance.

In embodiments of the invention, the STA receives the feedback message frame. The first operating parameter of the feedback message frame is identical to the second operating parameter of the NDPA frame and/or the third operating parameter of the DL NDP frame. Embodiments of the invention provide a method for feeding back a measurement result in a Non-TB sensing measurement procedure.

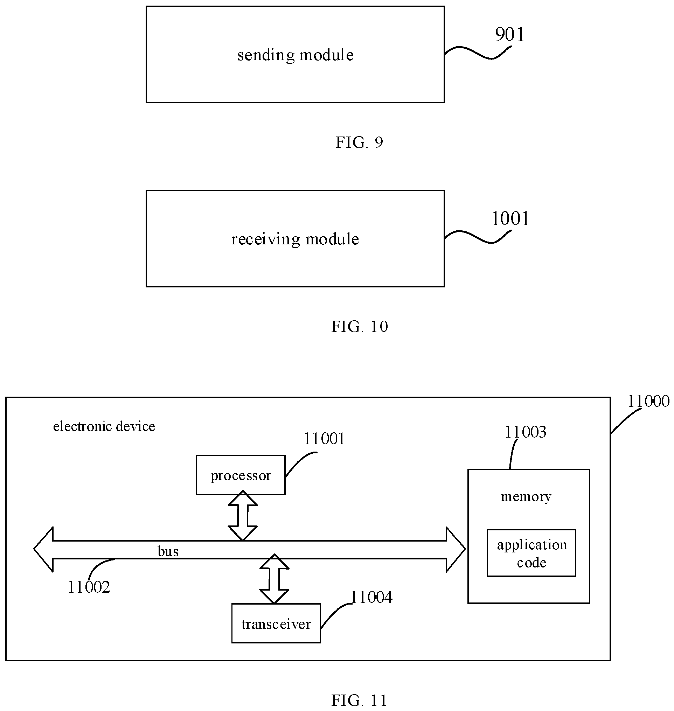

Referring to FIG. 9, based on the same principles as the method provided by embodiments of the invention, the embodiments of the invention also provide an AP. The AP includes:

a sending module 901, configured to send a feedback message frame, in which a first operating parameter of the feedback message frame is identical to a second operating parameter of an NDPA frame and/or a third operating parameter of a DL NDP frame.

In an optional embodiment, the AP includes:
an NDPA receiving module, configured to receive the NDPA frame before the sending module 901 sends the feedback message frame, and to determine the second operating parameter of the NDPA frame.

In an optional embodiment, the AP also includes:
an NDP receiving module, configured to receive an UL NDP frame before the sending module 901 sends the feedback message frame; and
a responding module, configured to send the DL NDP frame in response to the UL NDP frame.

In an optional embodiment, the feedback message frame includes WLAN sensing measurement identification information and/or time information, and
the time information includes a transmission time of the UL NDP frame.

In an optional embodiment, a number of LTFs in the DL NDP frame is a preset value.

In an optional embodiment, the first operating parameter, the second operating parameter and/or the third operating parameter are determined during a WLAN sensing session setup procedure or a WLAN sensing measurement setup procedure.

In an optional embodiment, the first operating parameter, the second operating parameter and/or the third operating parameter include at least one of the following:
NSS information, BW information and TX power information.

In the embodiments of the invention, the sending module 901 sends the feedback message frame. The first operating parameter of the feedback message frame is identical to the second operating parameter of the NDPA frame and/or the third operating parameter of the DL NDP frame. Embodiments of the invention provide a method for feeding back a measurement result in a Non-TB sensing measurement procedure.

Embodiments of the invention also provide a WLAN sensing measurement apparatus. The apparatus includes:
a message frame sending module, configured to send a feedback message frame, in which a first operating parameter of the feedback message frame is identical to a second operating parameter of an NDPA frame and/or a third operating parameter of a DL NDP frame.

The apparatus also includes other modules of the AP in the preceding embodiments, which will not be repeated herein.

Referring to FIG. 10, based on the same principles as the method provided by embodiments of the invention, the embodiments of the invention also provide an STA. The STA includes:
a receiving module 1001, configured to receive a feedback message frame, in which a first operating parameter of the feedback message frame is identical to a second operating parameter of an NDPA frame and/or a third operating parameter of a DL NDP frame.

In an optional embodiment, the STA includes:
an NDPA frame sending module, configured to send the NDPA frame before the receiving module 1001 receives the feedback message frame, in which the NDPA frame includes sensing sounding type information and/or an optional operating parameter for sending the NDP frame.

In an optional embodiment, the STA includes:
an NDP frame sending module, configured to send an UL NDP frame before the receiving module 1001 receives the feedback message frame, and to receive the DL NDP frame.

In an optional embodiment, the feedback message frame includes WLAN sensing measurement identification information and/or time information, and
the time information includes a transmission time of the UL NDP frame.

In an optional embodiment, a number of LTFs in the DL NDP frame is a preset value.

In an optional embodiment, the first operating parameter, the second operating parameter and/or the third operating parameter are determined during a WLAN sensing session setup procedure or a WLAN sensing measurement setup procedure.

In an optional embodiment, the first operating parameter, the second operating parameter and/or the third operating parameter include at least one of the following:
NSS information, BW information and TX power information.

In embodiments of the invention, the receiving module 1001 receives the feedback message frame. The first operating parameter of the feedback message frame is identical to the second operating parameter of the NDPA frame and/or the third operating parameter of the DL NDP frame. Embodiments of the invention provide a method for feeding back a measurement result in a Non-TB sensing measurement procedure.

Embodiments of the invention also provide a WLAN sensing measurement apparatus. The apparatus includes:
a message frame receiving module, configured to receive a feedback message frame, in which a first operating parameter of the feedback message frame is identical to a second operating parameter of an NDPA frame and/or a third operating parameter of a DL NDP frame.

The apparatus also includes other modules of the STA in the above embodiments, which will not be repeated here.

In an optional embodiment, this embodiment of the invention also provide an electronic device as shown in FIG. 11. The electronic device 11000 shown in FIG. 11 may be a server, which includes a processor 11001 and a memory 11003. The processor 11001 is connected to the memory 11003 via a bus 11002, for example. Optionally, the electronic device 11000 may also include a transceiver 11004. It should be noted that in practical applications, there may be more than one transceiver 11004, and the structure of the electronic device 11000 does not constitute a limitation of the embodiments of the invention.

The processor 11001 can be a Central Processing Unit (CPU), a general purpose processor, a Digital Signal Processor (DSP), an Application Specific Integrated Circuit (ASIC), a Field Programmable Gate Array (FPGA) or other programmable logic devices, transistor logic devices, hardware components, or any combination thereof. The processor 11001 may implement or execute various exemplary logic boxes, modules, and circuits described in combination with the contents disclosed in the invention. The processor 11001 may also be a combination that implements a computing function, for example, a combination consisting of one or more microprocessors, and a combination consisting of DSPs and microprocessors.

The bus 11002 may include a pathway to transfer information among the above components. The bus 11002 may be a Peripheral Component Interconnect (PCI) bus or an Extended Industry Standard Architecture (EISA) bus. The bus 11002 can be categorized as an address bus, a data bus, a control bus, and the like. For ease of representation, the bus 11002 is represented by only one thick line in FIG. 11, but it does not indicate that there is only one bus or one type of bus.

The memory 11003 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

The memory 11003 is configured to store application codes for executing the solution of the invention, and the execution is controlled by the processor 11001. The processor 11001 is configured to execute the application codes stored in the memory 11003 to implement the contents shown in the foregoing method embodiments.

The electronic device includes but is not limited to: a mobile phone, a notebook computer, a digital broadcast receiver, a personal digital assistant (PDA), a Pad, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 11 is only an example and should not impose any limitation on the functions and scope of use of the embodiments of the invention.

The server provided by the invention may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, Content Distribution Network (CDN), and big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited herein.

The embodiments of the invention provide a computer-readable storage medium having computer programs stored thereon. When the computer programs are executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of the execution is not necessarily sequential, but may be executed in turn or alternately with other steps or at least a portion of sub-steps or stages of other steps.

It is noted that the computer-readable medium described above in the invention may be a computer-readable signaling medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic memory devices, or any suitable combination thereof. In the invention, the computer-readable storage medium may be any tangible medium containing or storing programs that may be used by or in combination with an instruction execution system, apparatus or device. In the invention, a computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that can be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

The above computer-readable medium may be contained in the above electronic device or exist independently rather than being assembled into the electronic device.

The computer-readable medium carries one or more programs. When the one or more programs are executed by the electronic device, the electronic device is caused to implement the method shown in the above embodiments.

According to an aspect of the invention, a computer program product or computer program is provided. The computer program product or computer program includes computer instructions stored in a computer-readable storage medium. The processor of the computer device reads the computer instructions from the computer-readable storage medium, and the processor executes the computer instructions to cause the computer device to implement the method provided in the above optional implementations.

The computer program codes for performing the operations of the invention may be written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a LAN or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the invention. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the invention may be realized through software or hardware. The name of a module does not constitute a limitation of the module itself in a certain case. For example, module A may also be described as "module A for performing an operation B".

The above description is only preferred embodiments of the invention and an explanation of the technical principles utilized. It should be understood by those skilled in the art that the scope of invention involved in the invention is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the invention.

## Claims

1. A wireless local area network (WLAN) sensing measurement method, applied to an access point (AP), comprising:
sending a feedback message frame, wherein a first operating parameter of the feedback message frame is identical to a second operating parameter of a null data packet announcement (NDPA) frame and/or a third operating parameter of a downlink null data packet (DL NDP) frame.

2. The method of claim 1, wherein before sending the feedback message frame, the method further comprises:
receiving the NDPA frame, and determining the second operating parameter of the NDPA frame.

3. The method of claim 1, wherein before sending the feedback message frame, the method further comprises:
receiving an uplink null data packet (UL NDP) frame; and
sending the DL NDP frame in response to the UL NDP frame.

4. The method of claim 3, wherein: the feedback message frame comprises WLAN sensing measurement identification information and/or time information; and
the time information comprises a transmission time of the UL NDP frame.

5. The method of claim 1, wherein a number of long training fields (LTFs) in the DL NDP frame is a preset value.

6. The method of claim 1, wherein the first operating parameter, the second operating parameter and/or the third operating parameter are determined during a WLAN sensing session setup procedure or a WLAN sensing measurement setup procedure.

7. The method of any one of claims 1-6, wherein the first operating parameter, the second operating parameter and/or the third operating parameter comprise at least one of:
number of spatial streams (NSS) information, bandwidth (BW) information or transmit (TX) power information.

8. A wireless local area network (WLAN) sensing measurement method, applied to a station (STA), comprising:
receiving a feedback message frame, wherein a first operating parameter of the feedback message frame is identical to a second operating parameter of a null data packet announcement (NDPA) frame and/or a third operating parameter of a downlink null data packet (DL NDP) frame.

9. The method of claim 8, wherein before receiving the feedback message frame, the method further comprises:
sending the NDPA frame, wherein the NDPA frame comprises sensing sounding type information and/or an optional operating parameter for sending the NDP frame.

10. The method of claim 8, wherein before receiving the feedback message frame, the method further comprises:
sending an uplink null data packet (UL NDP) frame, and receiving the DL NDP frame.

11. The method of claim 10, wherein the feedback message frame comprises WLAN sensing measurement identification information and/or time information, and
the time information comprises a transmission time of the UL NDP frame.

12. The method of claim 8, wherein a number of long training fields (LTFs) in the DL NDP frame is a preset value.

13. The method of claim 8, wherein the first operating parameter, the second operating parameter and/or the third operating parameter are determined during a WLAN sensing session setup procedure or a WLAN sensing measurement setup procedure.

14. The method of any one of claims 8-13, wherein the first operating parameter, the second operating parameter and/or the third operating parameter comprise at least one of:
number of spatial streams (NSS) information, bandwidth (BW) information or transmit (TX) power information.

15. An access point (AP), comprising:
a sending module, configured to send a feedback message frame, wherein a first operating parameter of the feedback message frame is identical to a second operating parameter of a null data packet announcement (NDPA) frame and/or a third operating parameter of a downlink null data packet (DL NDP) frame.

16. A station (STA), comprising:
a receiving module, configured to receive a feedback message frame, wherein a first operating parameter of the feedback message frame is identical to a second operating parameter of a null data packet announcement (NDPA) frame and/or a third operating parameter of a downlink null data packet (DL NDP) frame.

17. A wireless local area network (WLAN) sensing measurement apparatus, applied to an access point (AP), comprising:
a message frame sending module, configured to send a feedback message frame, wherein a first operating parameter of the feedback message frame is identical to a second operating parameter of a null data packet announcement (NDPA) frame and/or a third operating parameter of a downlink null data packet (DL NDP) frame.

18. A wireless local area network (WLAN) sensing measurement apparatus, applied to a station (STA), comprising:
a message frame receiving module, configured to receive a feedback message frame, wherein a first operating parameter of the feedback message frame is identical to a second operating parameter of a null data packet announcement (NDPA) frame and/or a third operating parameter of a downlink null data packet (DL NDP) frame.

19. An electronic device comprising a memory, a processor and computer programs stored on the memory and executable by the processor, wherein when the computer programs are executed by the processor, the method of any one of claims 1-14 is implemented.

20. A computer-readable storage medium having computer programs stored thereon, wherein when the computer programs are executed by a processor, the method of any one of claims 1-14 is implemented.
